# EUROPEAN PATENT SPECIFICATION

(11) **EP 2 877 772 B1**
(45) Date of publication and mention of the grant of the patent: **02.05.2018**
(21) Application number: 13751932.8
(22) Date of filing: 20.02.2013
(51) Int. Cl.: F16N 3/12, B05C 17/03, B66C 23/687, F16N 5/02

(54) **SYSTEM FOR LUBRICATION**
SCHMIERSYSTEM
SYSTÈME DE LUBRIFICATION

(30) Priority: 22.02.2012 SE 1200111
(43) Date of publication of application: 03.06.2015
(73) Proprietor: Berglund, Sven, 915 34 Ånäset (SE)
(72) Inventor: Berglund, Sven, 915 34 Ånäset (SE)
(86) International application number: PCT/SE2013/000025
(87) International publication number: WO 2013/126003

(56) References cited:
- GB-A- 2 445 545
- JP-A- 2003 164 782
- US-A- 3 337 899
- US-A- 3 960 294
- US-B1- 7 828 119

## Description

### Field of the Invention

The present invention concerns a system for lubrication (greasing) in accordance with the claims.

### Background and Prior Art

In many instances, there is a need to lubricate or grease surfaces which are mutually movable against one another. One way to lubricate these surfaces is to apply grease to the surfaces. Applying grease to surfaces that are to be lubricated may be accomplished in several different ways. For example, this may be carried out with some kind of grease gun or the like. Grease guns may be manually operated or motorized. Through the years grease guns have been developed in many various kinds of variants which are in turn intended to be used in many different types of applications.

There exist several problems with known types of grease guns and procedures (methods) for greasing different types of objects with grease. For example, existing grease guns may be difficult to use in specific situations where a long reach is desirable. A long reach is for example desirable during greasing of devices found in different types of vehicles and equipment. During, for example greasing of booms (crane arms) and the like, the accessibility attained by conventional grease guns is usually limited. Furthermore, lubrication (greasing) also consumes a considerable amount of time.

There also exists a problem with the fact that the person who carries out the lubrication (greasing) procedure would like to be able to switch between an applicator and a common grease tube. No current existing equipment on the market makes this possible today.

US3337899 describes a variant of a device for applying paint to a surface. The device is compriseed of a manually operated paint spray gun which is connected to an applicator. The spray gun is connected to the applicator via at least one channel. In one of the embodiments, the channel is exchanged for an elongated shaft which includes a channel. The elongated shaft is provided with a coupling member. The applicator further includes a roller with which paint is applied to the surfaces to be painted. One problem with the design of US3337899 according to its description is that it is not possible to apply grease or other substances of high viscosity with the device. Another problem with the design of US3337899 according to its description is that the channel and shaft that provides the substance to be applied by the roller does not include holes that enlarge or diminish in size (diameter) or increase or decrease in number along the length of the roller.

JP2003164782 describes a variant of a device for applying high-viscosity coating material to a surface to be treated. The design differs to a significant extent from the design of the present patent application. For example, the substance to be applied is supplied from the outside of the roller and not from the inside of the roller. The described applicator may not be used in a similar way as the present invention.

US3960294 describes a device with which viscous fluids and the like may be applied to surfaces and similar. A device is disclosed that may be used for applying paint, grease and the like to surfaces. US3960294 does not specify state that the shown and described roller is to be used to apply grease, but it is intended to be used to apply paint. It is also not possible to achieve the pressure required to apply the grease in a corresponding manner to the roller as in the present patent application.

Further, it is also a problem to hold and carry an electrically powered grease gun in a manner suitable for the purpose. One way to try to solve this problem is shown in US7828119. Here is described a battery-powered grease gun, which is arranged to be portable via a harness. The design differs from the design of the present patent application by it for example, among other things not being intended to use a roller for applying grease.

GB2445545 describes a variant of an applicator for paint, grease and the like. The design includes rollers with which grease and the like are applied to round objects and the like. The design also differs in other significant ways from the design in accordance with the present patent application.

US6467579 and 3780830 describes variants of hand-operated grease guns. The grease guns include a tubular part which is open at its one end. The designs differ in relation to the design in accordance with the present application.

### Brief Description of the Invention Concept

The main purpose of the present invention is to achieve an improved system for lubrication (greasing). Another purpose of the present invention is to create a system whose included components may be replaced. Yet another purpose of the present invention is to create an improved system for lubricating (greasing) crane arms (booms). It is a further purpose to create an improved grease gun which may be used in the system. A still further purpose of the present invention is to create an improved applicator for grease on crane arms (booms).

### Brief Description of the Drawings

In the following detailed description of the present invention, reference and references to the following figures will occur. Each figure is briefly described in the following figure list. The invention shown in the figures represents an exemplifying embodiment of the invention according to the present patent application. The exemplifying embodiments are not limiting for the scope of protection of the present patent application. Note that the figures are schematic and details may thus be omitted in these.
Fig. 1 shows a first exemplifying embodiment of the present invention.
Fig. 2 shows an alternative embodiment of the present invention.

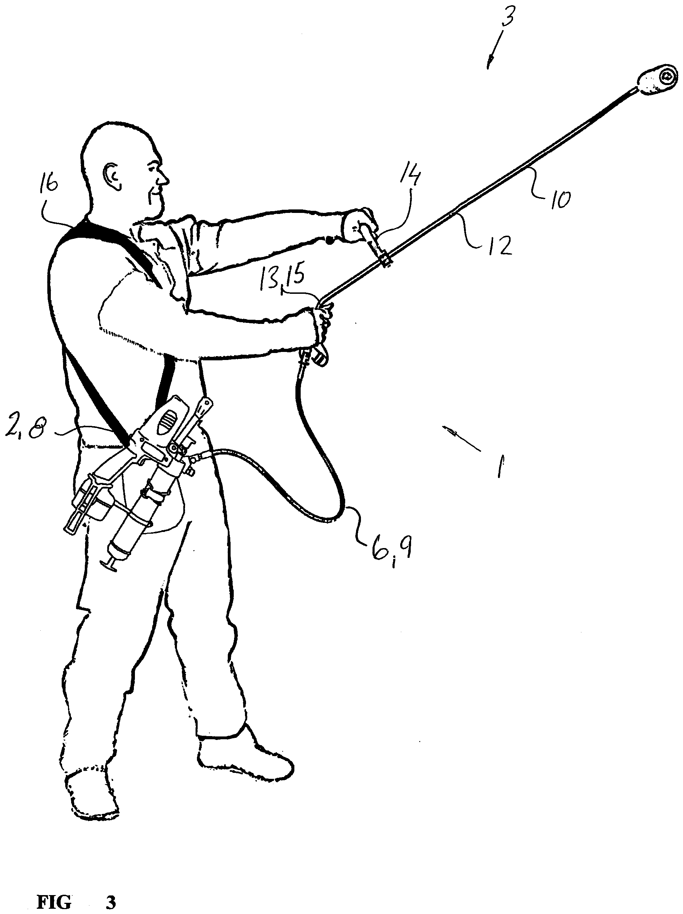

Fig. 3 shows a second alternative embodiment of the present invention.
Fig. 4 shows a third alternative embodiment of the present invention.
Fig. 5 shows a utilization of the present invention when used to grease surfaces on a crane arm.
Fig. 6 shows an exemplifying storage box for the system.
Fig. 7 shows an exploded view drawing of the roller with accompanying protection.

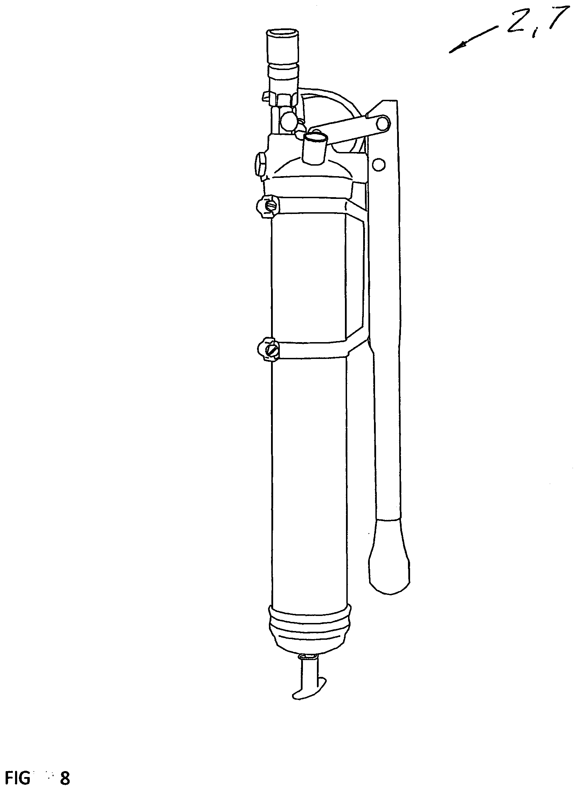

Fig. 8 shows an exemplifying manually operated grease gun.
Fig. 9 shows an alternative embodiment of the roller.
Fig. 10 shows several of the parts that may be included in the present system.

### Detailed Description of the Invention

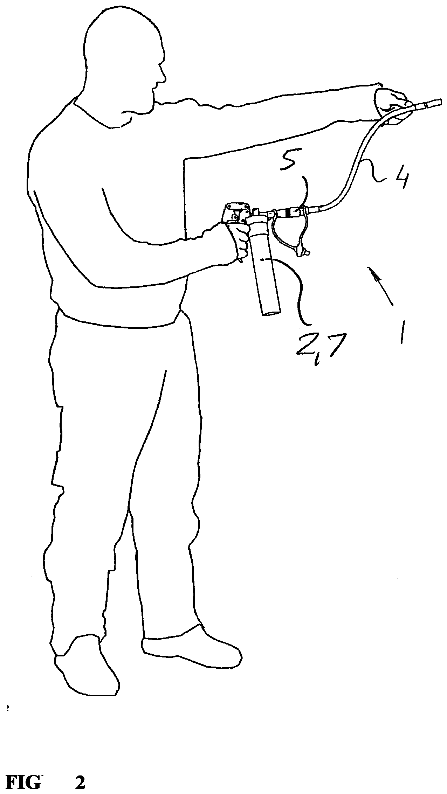

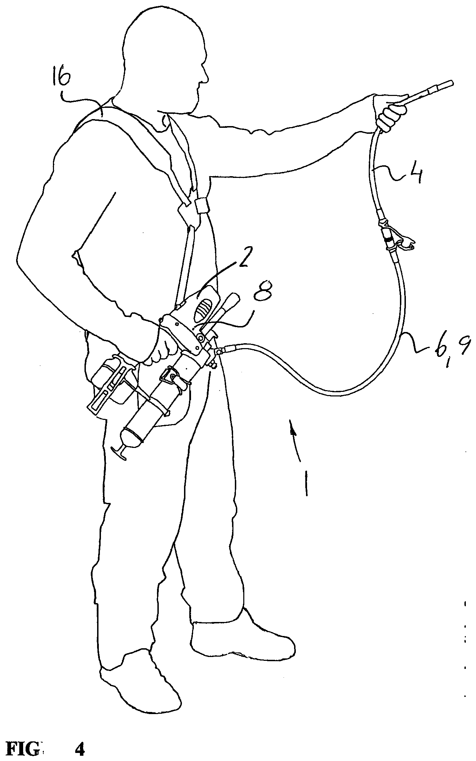

With reference to the figures, a system for greasing **1** in accordance with the present application is shown. The system 1 includes at least one grease gun **2** which is connected to at least one applicator **3** for grease, a grease gun hose (tube) **4** (shown in Fig. 2 and 4) for connection to a grease nipple or the like. The design allows for shifting between different variants of the applicator 3 or hose 4. The grease gun 2 is preferably connected to the applicator 3 with at least one quick-coupling **5** or the like. Other components may also be connected to one or more quick couplings 5.

In an alternative embodiment, the grease gun 2 is connected to the applicator 3 or grease gun hose via at least one connecting conduit **6.** The connecting conduit 6 is preferably connected to the grease gun and the applicator with quick-couplings or other for the purpose suitable coupling or connector parts.

The grease gun 2 may be a manually operated grease gun **7** or consist of a powered grease gun **8.** The manually operated grease gun and the powered grease gun may be of a previously known type of a grease gun which is suitable for the purpose.

The powered grease gun 8 is preferably operated by electricity. However, in alternative embodiments powered operation may be accomplished by another for the purpose suitable technology for power operation. For example, the powered grease gun 7 may operated by compressed air or other for the purpose suitable technology for power operation.

The connecting conduit 6 in the exemplifying part consists of at least one hose (pipe, tube, line) **9.** In alternative embodiments, the connecting conduit 6 may consist of another for the purpose suitable connecting conduit 6 such as at least one pipe, a combination of at least one pipe and a hose or the like. The connecting conduit's 6 one end is connected by its one part to the grease gun and in its other part to the applicator 3.

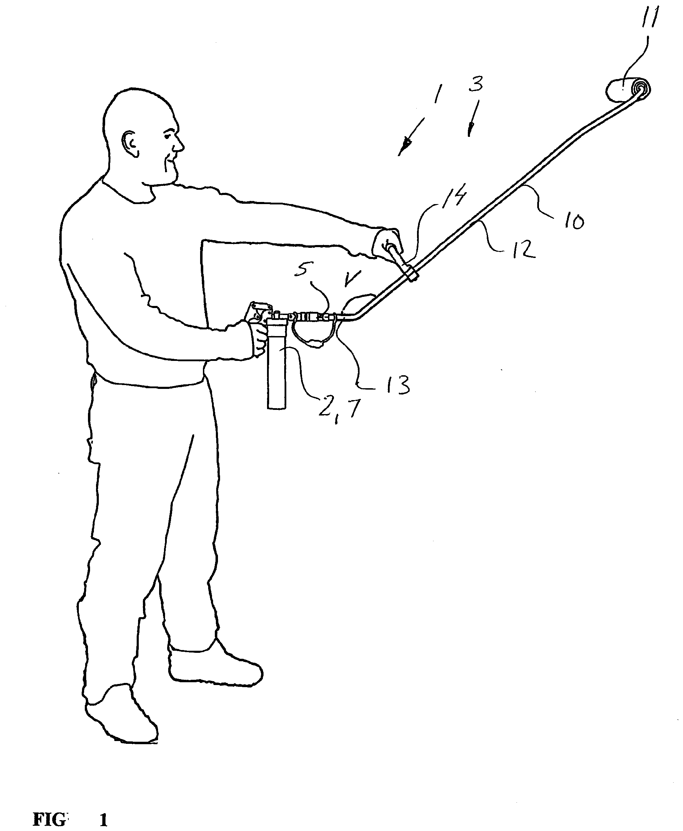

The applicator 3 may consist of several different types of designs. In the exemplifying embodiment, the applicator 3 includes at least one elongated shaft **10.** The elongated shaft 10 includes at least one channel (not shown), which culminates in a rotating (revolving) roller **11.** By way of this channel, grease or the like is supplied from the grease gun and connecting conduit to the rotating roller 11. With the rotating roller 11, grease may be applied to a surface or surfaces that are to be greased. The applicator's 3 shaft 10 includes at least one first part (partial length) **12** and at least one second part (partial length) **13** which are preferably angled relative each other. The first part 12 and the second part 13 are preferably angled via the angle V in Fig. 1, in a range between 155 to 172 degrees. In alternative embodiments, the angle between the first part 12 and the second part 13 may deviate from the stated range. The length of the shaft 10 in its entirety and the length of the first part 12 and second part 13 may vary within the scope of the protection of the invention.

The shaft 10 preferably includes an elongate tube provided with an inner channel. The tubes internal and external dimensions may vary greatly within the scope of protection of the patent application. However, it has unexpectedly been found that a near optimum performance is obtained if the tube (if the tube is made of steel) in the applicator shaft has an outer diameter of 16 mm and the inner diameter of 12 millimeters. A tube of a larger diameter will for example become heavy and a tube of lesser diameter will for example be unstable.

Further, the applicator 3 in the exemplifying embodiment includes at least one handle **14** which is operable between at least one first position and at least one second position. Because the second part 13 of the shaft 10 is angled relative to the first part 12 of the shaft 10, the first part 12 forms a second handle (grip) **15.**

The handle 14 may be of different versions (shapes, sizes, types) and forms. In the shown embodiments, the handle 14 is pivotally arranged around the elongated shaft 10. This allows the handle 14 to be rotated from a first position, shown in Fig. 1, where the grease gun is designed to be used as a hand-operated (manually operated) grease gun. When the handle 14 is rotated to the second position, the grease gun is intended to be utilized as a motorized grease gun.

In a preferred embodiment of the present patent application, the system includes a harness **16** with which the system may be worn by the user. The harness 16 may be of a variety of types and designs. In the preferred embodiment, the harness 16, however, is intended to be connected to the user over the shoulder with the grease gun hanging at the side of the user's body at the hip level. In alternative embodiments, the grease gun may be located elsewhere along the side of the user or in any other suitable for the purpose place near or on the body.

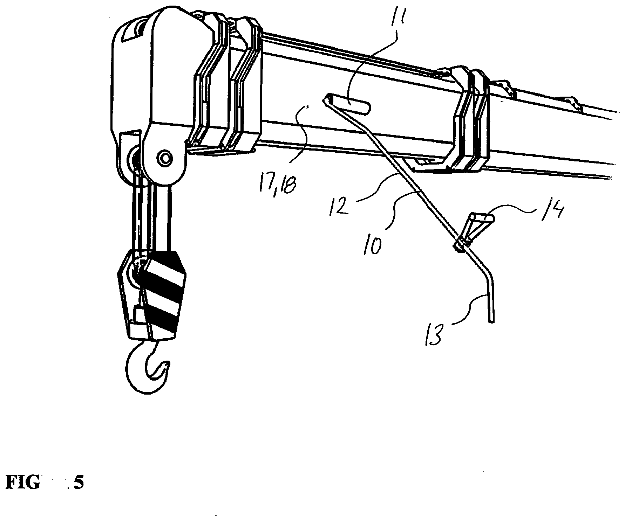

A central concept of the present patent application is that the system may be adapted according to each individual greasing need for different types of applications. However, in the exemplifying embodiment, the lubrication system is utilized to grease one or more surfaces on one or more components **17,** included for example in a crane arm (boom) **18** which is shown in Fig. 5.

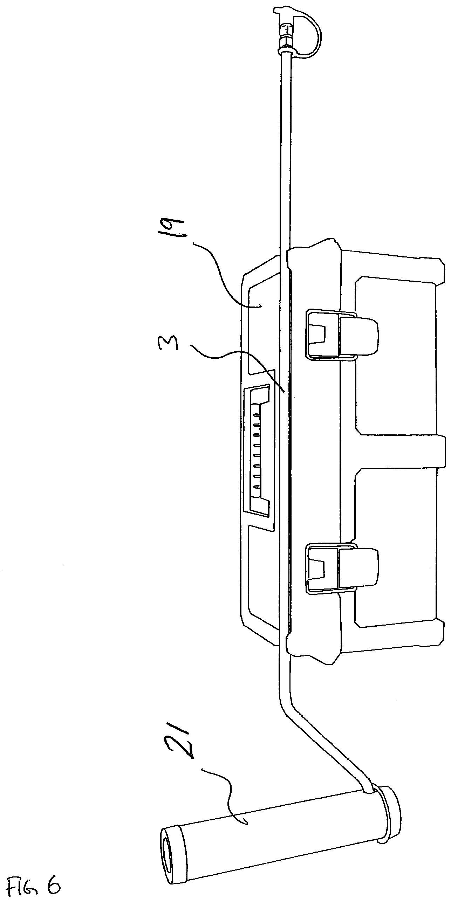

The system according to the present invention preferably includes at least one storage box **19** in which the system may be stored and transported. A possible storage and transportation box 19 is shown in Fig. 6. An applicator 3 has temporarily been attached to the box 19. The shown applicator 3 has an alternative straightly formed shaft (without the mutually angled parts 12 and 13) unlike the preferred form that is angled. The storage box may also accommodate grease cartridges and similar for the grease gun.

Referring to Fig. 6, is shown an exploded view drawing of the applicator (roller). The applicator is preferably a perforated roller, which includes a plurality of holes in the roller's radial direction. The dimensions of the holes may vary greatly within the invention's scope of protection. During use of the applicator (roller) grease is conveyed via the shaft into the roller via at least one channel in the shaft. The grease is conveyed from inside the channel through a plurality of longitudinally and radially placed holes **20** in the area of the shaft found within the applicator (where the roller 11 is placed on the shaft). The channel and shaft inside the applicator, that provides the grease to be applied by the roller 11 includes holes 20 that either enlarge or diminish in size (diameter) or increase or decrease in number along the length of the channel and shaft within the applicator. It has unexpectedly been found to be possible to obtain a uniform grease distribution via the roller 11 if the holes in the shaft within the roller increase in size towards the end of the shaft or if the plurality of holes increases towards the end of the shaft within the applicator in the direction from the grease gun in the direction of the grease flow in the channel. Fig. 6 also shows a protector **21** which is intended to be connected to the roller. The protector in the exemplifying embodiment consists of a tube **22** which is provided with at least one first end **23** and at least one second end **24.** The protector 21 minimizes the risk of grease on the roller 11 soiling the user or the surrounding environment when the applicator is not in use.

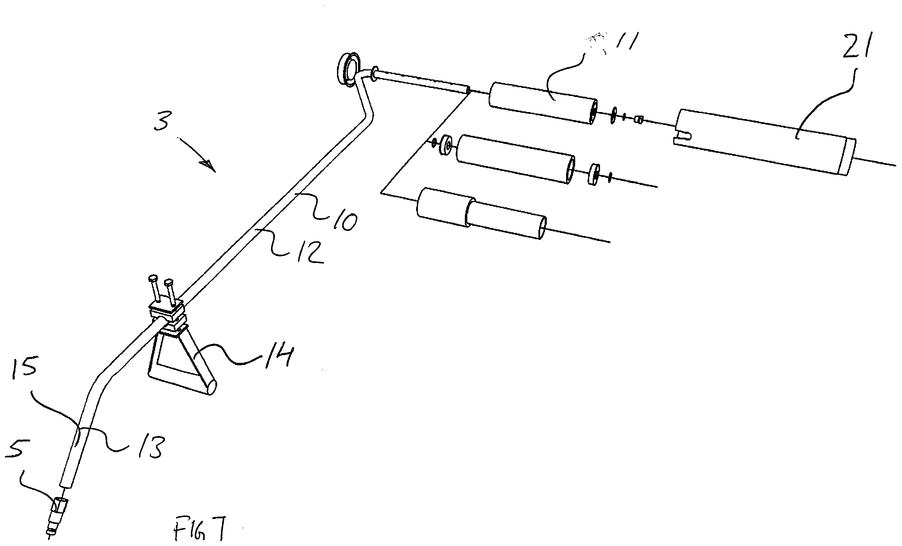

Referring to Figure 7, an exemplifying embodiment of a manually operated (hand-operated) grease gun which for example may be used in the system 1 is shown. The grease gun is preferably designed for use with grease in bulk. The grease gun is largely based on a previously known design, which is described in the Swedish patent SE509370 (the same inventor as in this application).

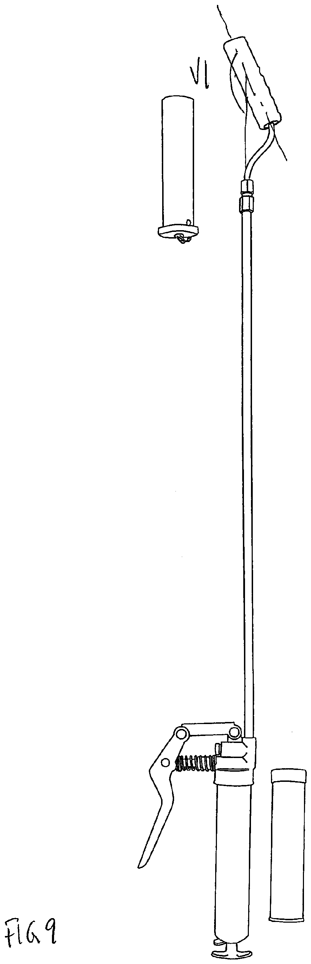

Referring to Fig. 9, an alternative embodiment of the roller according to the present invention is shown. The roller is in this embodiment angularly arranged within the range of 120 to 180 degrees. In alternative embodiments, it is conceivable that roller's angle deviates from the specified range.

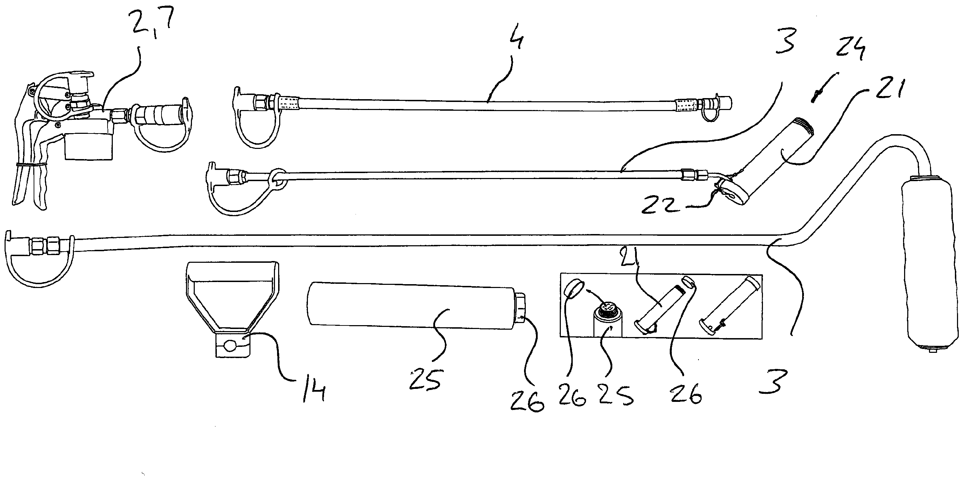

In Fig. 10 is shown several different parts of the present system. Among other parts, the manually operated grease gun 7 as well as the grease cartridge **25** and its grease cartridge cap **26** are shown separated from one another. Fig. 1 shows the grease cartridge 25 connected with the grease gun 7. One unique feature of the present system is that the grease cartridge cap 26 is intended to be used to cover the second end 24 of the protector 21 when the grease cartridge is for example connected to the grease gun 7. When the grease cartridge 25 is disconnected from the grease gun 7 the grease cartridge cap 26 may once again be reattached to the grease cartridge. By way of this design the grease cartridge cap is less likely to be misplaced or lost when the grease cartridge is attached to the grease gun. By utilizing the same cap in different ways less caps are needed and this is more environmentally sound.

In the detailed description of the present invention, design details may have been omitted which are apparent to persons skilled in the art in the field of the method and device. Such obvious design details are included to the extent necessary so that the proper and full performance of the present invention is achieved.

Even if certain preferred embodiments have been described in detail, variations and modifications within the scope of the invention may become apparent for specialists in the field. All such modifications and variations are regarded as falling within the scope of the following claims.

### Advantages of the Invention

With the present invention, a number of advantages are achieved. The most obvious advantage is that a system for lubricating (greasing) surfaces is achieved. Another advantage of the present invention is that a lubrication system is achieved which may be used for both manually and electrically operated grease guns. A further advantage of the present invention is that the system for lubrication may be carried with a harness. A still further advantage of the present invention is that the system allows grease to be applied to a crane arm (boom) in an efficient manner. A yet further advantage of the present invention is that the grease cartridge cap may be used to cover the second end of the protector when the grease cartridge is attached to the grease gun virtually eliminating lost or misplaced caps.

## Claims

1. System (1) for the lubrication of components comprised of at least one grease gun (2) and at least one replaceable applicator (3) for grease **characterized by** that the grease gun (2) may be switched between a manually operated grease gun (7) and a power operated grease gun (8), and that the applicator (3) includes an elongated shaft (10) which includes at least one channel, which culminates into the rotating roller (11) with which grease is applied to the surfaces of components or the like that are to be greased with the system and that grease is conveyed from inside the channel through a plurality of longitudinally and radially placed holes (20) in the area of the shaft found within the applicator (3), said holes (20) enlarging in size along the length of the channel and shaft within the applicator in the direction from the grease gun in the direction of the grease flow in the channel, allowing for grease to be supplied more uniformly along the roller (11), said system (1) also including at least one grease cartridge (25), at least one grease cartridge cap (26) and at least one protector (21) which is intended to be used to protect the roller (11) when not in use, said protector (21) having at least one first end (23) and at least one second end (24), said grease cartridge cap (26) being able to attach to the second end (24) of the protector (21) when the grease cartridge (25) is attached to the grease gun (7), when the grease cartridge (25) is disconnected from the grease gun the grease cartridge cap (26) may once again be reattached to the grease cartridge.

2. System (1) in accordance with claim 1 **characterized by** that the applicator's shaft (10) and channel includes one first part (12) and one second part (13) which are mutually angled.

3. System (1) in accordance with claim 1 and 2 **characterized by** that the applicator's shaft (10) includes one first part (12) and one second part (13) which are mutually angled.

4. System (1) in accordance with claim 2 **characterized by** that the first part (12) and the second part (13) are angled within an interval between 155 to 172 degrees.

5. System (1) in accordance with at least one of the previous claims **characterized by** that the system includes at least one first handle (14) and a second handle (15) which are attached to or integrated with the shaft.

6. System (1) in accordance with claim 2 **characterized by** that the first handle (14) is pivotally attached to the shaft's (10) first part (12) and that the second handle (15) consists of the second part (13) of the shaft.

7. System (1) in accordance with at least one of the previous claims **characterized by** that the power operated grease gun (8) is electrically driven.

8. System (1) in accordance with at least one of the previous claims **characterized by** that the system includes a manually operated grease gun (7).

9. System (1) in accordance with at least one of the previous claims **characterized by** that the system includes at least one storage box (19) with which the system may be transported.

10. System (1) in accordance with at least one of the previous claims **characterized by** that the system includes at least one protector (21) for the rotating roller.

11. System (1) in accordance with at least one of the previous claims **characterized by** that the system includes an angled roller angularly arranged within the range of 120 to 180 degrees in relation to shaft (10).

12. System (1) in accordance with at least one of the previous claims **characterized by** that the system includes an angled roller that is angled within an interval between 30 to 70 degrees.

13. Use of the system (1) in accordance with at least one of the previous claims for lubrication of components in crane arms, booms and similar.

## Patentansprüche

1. System (1) für die Schmierung von Komponenten, das mindestens eine Schmierpistole (2) und mindestens einen austauschbaren Applikator (3) für Schmiermittel umfasst, **gekennzeichnet dadurch, dass** die Schmierpistole (2) zwischen einer manuell betätigten Schmierpistole (7) und einer kraftbetätigten Schmierpistole (8) umgeschaltet werden kann, und dass der Applikator (3) eine verlängerte Welle (10) hat, die mindestens einen Kanal beinhaltet, der in die Drehrolle (11) mündet, mit der Schmiermittel auf die Oberflächen der Komponenten oder ähnliche Teile aufgetragen wird, die mit dem System geschmiert werden sollen, und das Schmiermittel wird in diesem Kanal durch eine Vielzahl von längs und strahlenförmig angeordneten Löchern (20) in dem Bereich der Welle im Applikator (3) transportiert wird, wobei die besagten Löcher (20) der Länge des Kanals und der Welle im Applikator entlang in der Richtung von der Schmierpistole in Richtung des Schmiermittelflusses im Kanal größer werden, sodass das Schmiermittel gleichmäßiger entlang der Rolle (11) aufgetragen werden kann, wobei das besagte System (1) auch mindestens eine Schmierkartusche (25), mindestens einen Schmierkartuschendeckel (26) und mindestens einen Protektor (21) umfasst, der die Rolle (11) schützen soll, wenn diese nicht verwendet wird, und dieser besagte Protektor (21) hat mindestens ein erstes Ende (23) und mindestens ein zweites Ende (24), der besagte Schmierkartuschendeckel (26) kann dabei am zweiten Ende (24) des Protektors (21) befestigt werden, wenn die Schmierkartusche (25) an der Schmierpistole (7) befestigt ist, und wenn die Schmierkartusche (25) von der Schmierpistole getrennt wird, kann der Schmierkartuschendeckel (26) erneut an der Schmierkartusche befestigt werden,

2. System (1) entsprechend Forderung 1, **gekennzeichnet dadurch, dass** die Applikatorwelle (10) und der Kanal einen ersten Teil (12) und einen zweiten Teil (13) umfassen, die zueinander angewinkelt sind.

3. System (1) entsprechend Forderungen 1 und 2, **gekennzeichnet dadurch, dass** die Applikatorwelle (10) einen ersten Teil (12) und einen zweiten Teil (13) umfasst, die zueinander angewinkelt sind.

4. System (1) entsprechend Forderung 2, **gekennzeichnet dadurch, dass** der erste Teil (12) und der zweite Teil (13) innerhalb eines Bereichs zwischen 155 und 172 Grad angewinkelt sind.

5. System (1) entsprechend mindestens einer der vorhergehenden Forderungen, **gekennzeichnet dadurch, dass** das System mindestens einen ersten Griff (14) und einen zweiten Griff (15) umfasst, die an der Welle befestigt oder in diese eingebaut sind.

6. System (1) entsprechend Forderung 2, **gekennzeichnet dadurch, dass** der erste Griff (14) mittig am ersten Teil (12) der Welle (10) montiert ist, und dass der zweite Griff (15) aus dem zweiten Teil (13) der Welle besteht.

7. System (1) entsprechend mindestens einer der vorhergehenden Forderungen, **gekennzeichnet dadurch, dass** die kraftbetätigte Selimierpistole (8) elektrisch betätigt ist.

8. System (1) entsprechend mindestens einer der vorhergehenden Forderungen, **gekennzeichnet dadurch, dass** das System eine manuell betätigte Schmierpistole (7) umfasst.

9. System (1) entsprechend mindestens einer der vorhergehenden Forderungen, **gekennzeichnet dadurch, dass** das System mindestens einen Aufbewahrungsbehälter (19) umfasst, in dem das System transportiert werden kann.

10. System (1) entsprechend mindestens einer der vorhergehenden Forderungen, **gekennzeichnet dadurch, dass** das System mindestens einen Protektor (21) für die Drehrolle umfasst.

11. System (1) entsprechend mindestens einer der vorhergehenden Forderungen, **gekennzeichnet dadurch, dass** das System eine Winkelrolle umfasst, die innerhalb eines Winkels von 120 bis 180 Grad zur Welle (10) angeordnet ist.

12. System (1) entsprechend mindestens einer der vorhergehenden Forderungen, **gekennzeichnet dadurch, dass** das System eine Winkelrolle umfasst, die innerhalb eines Winkels von 30 bis 70 Grad angeordnet ist.

13. Verwendung des Systems (1) entsprechend mindestens einer der vorhergehenden Forderungen für die Schmierung von Komponenten von Kranarmen, Kranauslegern und ähnlichem.

## Revendications

1. Système (1) pour lubrifier les composants composés d'au moins un pistolet graisseur (2) et d'au moins un applicateur interchangeable (3) pour la graisse, **caractérisé par le fait que** le pistolet graisseur (2) peut être échangé entre un pistolet graisseur actionné manuellement (7) et un pistolet graisseur actionné électriquement (8), et que l'applicateur (3) inclut un arbre allongé (10) qui inclut au moins un tuyau, qui s'achève sur le rouleau rotatif (11) avec lequel la graisse est appliquée sur les surfaces des composants ou similair qui doivent être graissés avec le système et que la graisse est transportée depuis l'intérieur du tuyau vers plusieurs trous placés de manière longitudinale et radiale (20) dans la zone de l'arbre trouvée au sein de l'applicateur (3), lesdits trous (20) s'élargissant en taille le long de la longueur du tuyau et de l'arbre à l'intérieur de l'applicateur dans la direction du pistolet graisseur dans la direction du débit de graisse dans le tuyau, permettant à la graissse d'être distribuée de manière plus régulière le long du rouleau (11), ledit système (1) incluant également au moins une cartouche de graisse (25), au moins un bouchon de cartouche de graisse (26) et au moins un protecteur (21) qui sera utilisé pour protéger le rouleau (11) lorsqu'il n'est pas utilisé, ce protecteur (21) possède au moins une première extrémité (23) et au moins une seconde extrémité (24), le bouchon de cartouche de graisse (26) pouvant être attaché à la seconde extrémité (24) du protecteur (21) quand la cartouche de graisse (25) est fixée au pistolet graisseur (7), quand la cartouche de graisse (25) est détachée du pistolet graisseur le bouchon de cartouche de graisse (26) peut à nouveau être fixé à la cartouhce de graisse,

2. Système (1) en conformité avec la revendication 1 **caractérisé par le fait que** l'arbre (10) de l'applicateur et le tuyau comprennent une première partie (12) et une seconde partie (13) qui sont mutuellement coudées.

3. Système (1) en conformité avec la revendication 1 et 2 **caractérisé par le fait que** l'arbre (10) de l'applicateur inclut une première partie (12) et une seconde partie (13) qui sont mutuellement coudées.

4. Système (1) en conformité avec la revendication 2 **caractérisé par le fait que** la première partie (12) et la seconde partie (13) sont coudées à un intervalle entre 155 et 172 degrés.

5. Système (1) en conformité avec au moins une des précédentes revendications, **caractérisé par le fait que** le système inclut au moins une première poignée (14) et une seconde poignée (15) qui sont fixées ou intégrées sur l'arbre.

6. Système (1) en conformité avec la revendication 2, **caractérisé par le fait que** la première poignée (14) est rotativement fixée à la première partie (12) de l'arbre (10) et la seconde poignée (15) constitue la seconde partie (13) de l'arbre.

7. Système (1) en conformité avec au moins une des précédentes revendications, **caractérisé par le fait que** le pistolet graisseur (8) à commande électrique est à entraînement électrique.

8. Système (1) en conformité avec au moins une des précédentes revendications, **caractérisé par le fait que** le système inclut un pistolet graisseur (7) à commande manuelle.

9. Système (I) en en conformité avec au moins une des précédentes revendications, **caractérisé par le fait que** le système inclut au moins un bac de rangement (19) avec laquelle le système peut être transporté.

10. Système (1) en conformité avec au moins une des précédentes revendications, **caractérisé par le fait que** le système inclut au moins un protecteur (21) pour le rouleau rotatif

11. Système (1) en conformité avec au moins une des précédentes revendications, **caractérisé par le fait que** le système inclut un rouleau coudé agencé angulairement dans la gamme de 120 à 180 degrés par rapport à l'arbre (10).

12. Système (1) en conformité avec au moins une des précédentes revendications, **caractérisé par le fait que** le système inclut un rouleau coudé sur un intervalle entre 30 et 70 degrés.

13. Utilisation du système (1) en conformité avec au moins une des précédentes revendications pour la lubrification des composants sur les bras de grues, les flèches et similaires.
